# EUROPEAN PATENT APPLICATION

(11) **EP 0 908 898 A1**
(43) Date of publication of application: **14.04.1999**
(21) Application number: 98308198.5
(22) Date of filing: 08.10.1998
(51) Int. Cl.: G21C 3/352, G21C 3/34

(54) **Grid assembly of a nuclear reactor fuel assembly and method for fabricating same**

(30) Priority: 09.10.1997 JP 277249/97
(71) Applicant: Mitsubishi Heavy Industries, Ltd., Tokyo (JP); Mitsubishi Nuclear Fuel Co., Ltd., Naka-gun, Ibaraki-ken (JP)
(72) Inventor: Naitou, Toshifumi Kobe Shipyard & Machinery Works, Hyogo-ku, Kobe, Hyogo-ken (JP); Kawagoe, Toshiyuki, Mitsubishi Heavy Ind. Ltd., Tokyo (JP); Nakayama, Kimio, Mitsubishi Nuclear Fuel Co., Ibaraki-Ken (JP)
(74) Representative: Perkins, Sarah

(57) **Abstract**

A grid assembly for a nuclear reactor fuel assembly including an improved structure of a corner portion which is prevented from being damaged by interference between grids of adjacent fuel assemblies. The grid assembly comprising a plurality of inner straps which are disposed to extend in directions parallel and perpendicular to one another, are placed in engagement with one another, and are made of thin metal strips, and outer straps each positioned at four sides thereof for surrounding a group of the inner straps, the outer straps being made of thin metal strips. The grid is characterized in that smooth tapered edge surfaces are formed at slanted portions of the outer straps by coining or laser beam irradiation.

## Description

### BACKGROUND OF THE INVENTION

### 1. Field of the Invention

The present invention relates to structure of a nuclear reactor fuel assembly, and more particularly to structure of a grid assembly for supporting fuel rods of a fuel assembly for a pressurized water reactor and to a method for fabricating the grid assembly.

### 2. Description of the Related Art

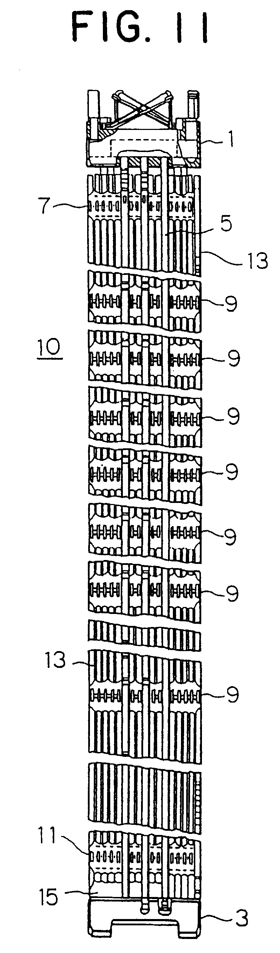

An example of a fuel assembly for a pressurized water reactor is shown in Fig. 11. Briefly describing this structure, the fuel assembly 10 is composed of an upper nozzle 1, a lower nozzle 3, a plurality of control rod guide tubes 5 for connecting these nozzles to each other, an upper grid 7, a plurality of intermediate grids 9 and a lower grid 11 which are arranged and fixed at intervals in the longitudinal direction on the control rod guide tubes 5, a plurality of fuel rods 13 extending through grid cells of the respective grids 7, 9, 11 and supported thereby, and a foreign object filter 15 disposed between the lower grid 11 and the lower nozzle 3.

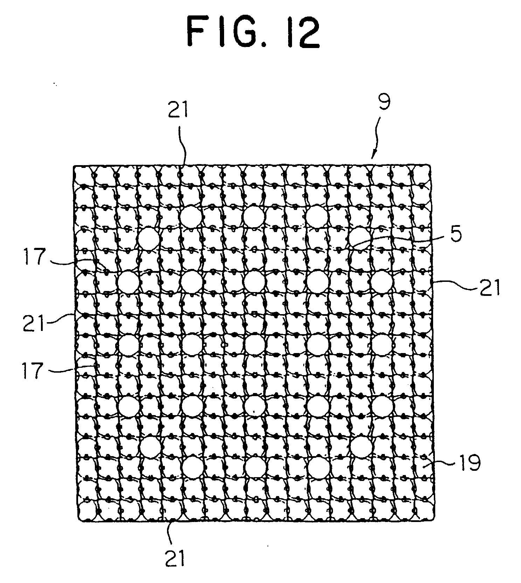

The upper grid 7, the intermediate grids 9 and the lower grid 11 above described are made of different material but have substantially the same shape from the viewpoint of structure and the plan view of the intermediate grid 9 is shown in Fig. 12 as a typical example. In Fig. 12, inner straps 17 constituting the grid 9 are made by punching out a thin strip material of a zirconium base alloy. A plurality of the straps 17 are assembled in parallel and perpendicular to one another to define a number of grid cells 19 among the adjacent straps by interleaving lateral slits each cut out at an equal interval in the longitudinal direction. Furthermore, outer straps 21 for connecting ends of the adjacent inner straps 17 to each other are provided at four sides to form the intermediate grid 9 having an outer periphery of a generally square shape. The above described control rod guide tubes 5 are placed through and fixed in some of the grid cells 19 in a predetermined arrangement, and the fuel rods 13 are placed through and supported in grid cells 19 which are empty in Fig. 12. Incidentally, the outer straps 21 are made of the same material as that of the inner straps 17. Interleaved portions between the inner straps 17 and the joint portions between the inner straps 17 and the outer straps 21 are firmly fixed together by suitable means such as welding.

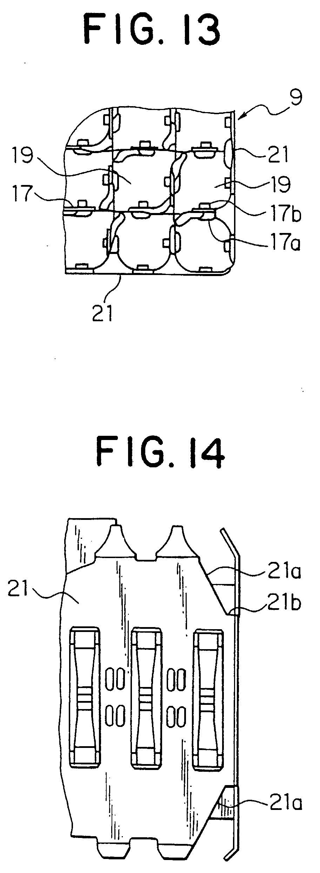

In Figs. 13 and 14, a structure of the grid 9 at a corner portion is shown in enlarged views. Projections (hereinafter referred to as dimples) 17a and springs 17b are formed by being shaped as integral parts of the inner straps 17 corresponding to the center of the respective grid cells 19. Although not shown, the dimples 17a and the springs 17b are displaced in a transverse direction of the inner straps 17 and are formed on the front and rear side, respectively. Then, the dimples 17a and the springs 17b of the facing two inner straps 17 defining one grid cell 19 form three support points for the fuel rod 13 to thereby resiliently support the fuel rod 13 placed in and through the grid cell 19.

On the other hand, as shown specifically in Fig. 14, the outer straps 21 have slanted portions 21a on both edge sides adjacent to their ends, which slanted portions terminate at joint ends 21b. Then, adjacent outer straps 21, 21 are fixed at four corners of the intermediate grid 9 by folding the joint end portions 21b, placing them one on another and welding them. The upper and lower edges of the joint end portions 21b of such outer straps 21 and the slant portions 21a adjacent thereto are finished into a smooth condition by grinding after completing assembly and welding so as not to form sharp edges on the outer surfaces.

As described above with reference to the intermediate grid as an example, both of the upper and lower side edges of the outer strap at the four corner portions of the grid having the square shape in plan view are finished into a smooth state by grinding. Since the upper grid and the lower grid are made of a nickel base alloy, it is possible to perform finishing grinding as described above with a conventional automatic grinder. However, since the intermediate grids made of a zirconium base alloy are relatively soft with regards to the material and are easy to ignite (be oxidized), there is a fear that the grids may ignite during grinding operations with a conventional automatic grinder. Accordingly, such a grinder can not be used and a finishing grinding operation must be performed with a manual grinder. For this reason, efficiency in fabricating the intermediate grids of zirconium base alloy is forced to remain rather low.

Furthermore, on providing a special automatic grinder that can perform automatic grinding operations on the intermediate grids, the working space for grinding must be kept in an inert atmosphere so as to avoid burning. The manufacturing costs thereof would, therefore, be higher, in comparison with that for conventional automatic grinders resulting in increased cost of the intermediate grids.

### SUMMARY OF THE INVENTION

Accordingly, an object of the present invention is to provide a grid assembly of a fuel assembly for a nuclear reactor and a manufacturing method wherein smooth finishing to a corner portion of an outer strap of the grid can be accomplished at lower cost even if the material for the product is one which is soft and apt to ignite such as a zirconium base alloy.

In order to solve the above mentioned problems and accomplish other objects, according to the present invention, in a grid assembly of a nuclear reactor fuel assembly comprising a plurality of inner straps which are disposed to extend in directions parallel and perpendicular to one another, are placed in engagement with one another, and made of thin metal strip, with outer straps each positioned at four sides thereof for surrounding a group of the inner straps, the outer straps being made of thin metal strips, the grid assembly being characterized in that smooth tapered edge surfaces are formed at slanted portions of the outer straps by coining or laser beam irradiation.

According to another aspect of the invention, in a method for fabricating a grid assembly of a nuclear reactor fuel assembly comprising a plurality of inner straps which are disposed to extend in directions parallel, and perpendicular to one another, placed in engagement with one another, and made of thin metal strip and outer straps being positioned at four sides thereof for surrounding the group of the inner straps, and made of thin metal strip, the method is characterized by comprising steps of forming smooth tapered edge surfaces by coining slanted portions of the outer strap, and folding and joining the outer strap by welding.

Furthermore, according to the method of the invention, the step of welding includes a step of forming a smooth tapered edge surface by laser beam irradiation along the slanted portions of the outer straps at a corner at which they are folded.

Moreover, according to the method of the invention, a step of holding a block having a tapered surface of the same angle as that of the folded corner portion on the corner portion of the grid assembly is included, the block being slid and sliding it along the corner so as to form a snugly fitting shape thereby reducing interferences.

### BRIEF DESCRIPTION OF THE DRAWINGS

In the accompanying drawings:
Fig. 1 is a fragmentary plan view showing a part of a grid in an embodiment of the invention;
Fig. 2 is a fragmentary elevational view as viewed in the direction II in Fig. 1;
Fig. 3 is a fragmentary sectional view taken along the line III-III in Fig. 2;
Fig. 4 is a drawing for illustrating a fabricating state of a component of the grid in the embodiment;
Figs. 5(a) and 5(b) are full views of a working tool used in the embodiment;
Fig. 6 is a fragmentary plan view showing a part of a grid in another embodiment of the invention;
Fig. 7 is a fragmentary elevational view as viewed in the direction VII of Fig. 6;
Fig. 8 is a drawing illustrating a fabricating state of a component of the grid in the last mentioned embodiment;
Fig. 9 is a fragmentary sectional view showing a local shape of an outer strap of the grid in the last mentioned embodiment;
Fig. 10 is a drawing illustrating another fabricating state;
Fig. 11 is a general elevational view showing a nuclear reactor fuel assembly in which a grid according to the invention is applicable;
Fig. 12 is a plan view showing one example of the grid of the fuel assembly in Fig.11;
Fig. 13 is an enlarged fragmentary plan view showing the grid shown in Fig. 12; and
Fig. 14 is an enlarged plan view corresponding to Fig. 13 for showing the grid.

### DESCRIPTION OF THE PREFERRED EMBODIMENT

The present invention will be hereinafter described in association with an embodiment shown referring to the accompanying drawings.

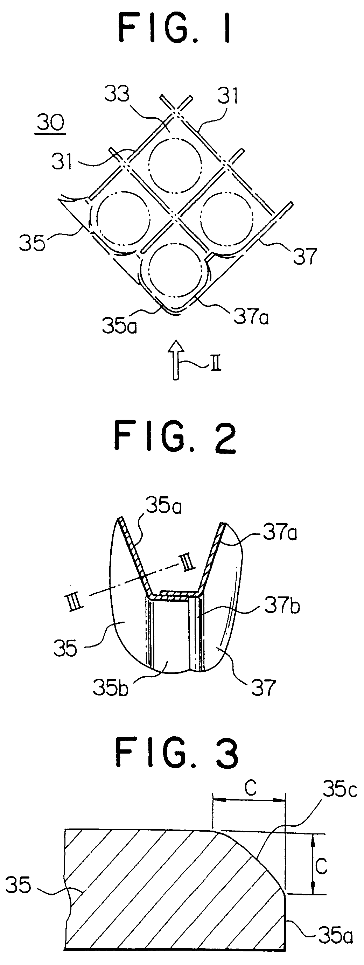

Referring to Fig. 1 first, a corner portion of a grid 30 for a fuel assembly according to the present invention is shown therein. Inner straps 31 which are shaped from a thin strip material of zirconium base alloy are assembled in an egg-crate configuration such as in the above described conventional grid, and define grid cells 33 each of generally rectangular shape in a plan view among the adjacent inner straps 31. When the grid 30 is assembled into the fuel assembly, fuel rods and control rod guide tubes (not shown) are placed in and through the grid cells 33. Outer straps 35, 37 which have the same configuration except that their lap welded portions somewhat different in dimensions are placed adjacent to each other at the corner portions with terminal portions of their slanted portions 35a, 37a overlapped. Fig. 2 is a side view of the corner portion as viewed in a direction II, and as shown therein, a joint end portion 35b of the outer strap 35 and a joint end portion 37b of the outer strap 37 are overlapped and welded together. In addition to the above, an illustrated state in Fig. 2 shows the straps in a temporarily assembled condition before welding so as to appreciate the mutual relationship between the outer straps 35, 37. Accordingly, it should be understood that the predetermined portions are molten and solidified if a welding work is applied thereto. Then, the slanted portions 35a, 37a are shaped by coining at their corner edges. This state is shown in Fig. 3 where a coined portion is designated with a reference numeral 35c. In Fig. 3, a deformation C by coining is in the range of (2/3)t to (1/3)t where t is the plate thickness of the outer straps 35, 37. The surface of the coined portions 35c is worked out plastically and finished to the same degree as grinding.

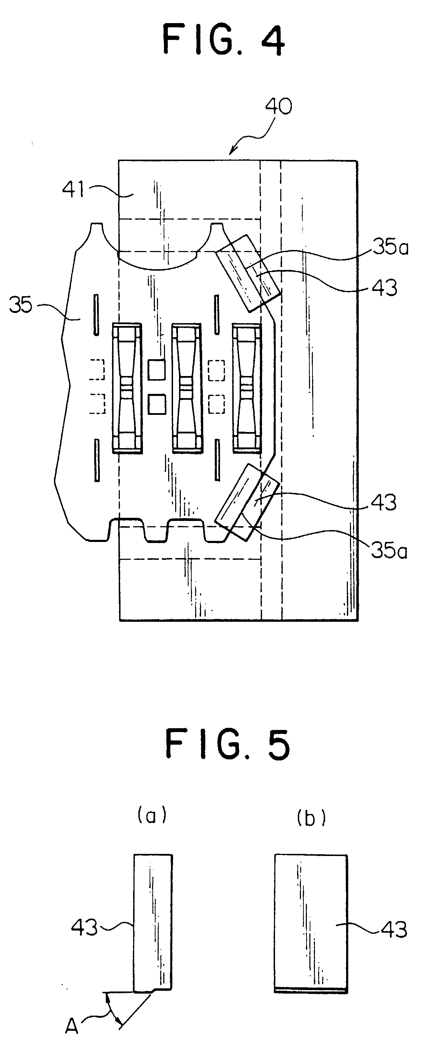

The working steps by coining will now be described with reference to Figs. 4, 5. As shown in Fig. 4, a coining die 40 is composed of a mold 41 and symmetrically arranged punches 43. This die 40 is applied to the slanted portions 35a of the outer straps 35 in a blank state to impart a deformation thereto. Fig. 5 shows a detail of the shape of the punches 43 and a tapering angle "A" for shaping is 45°. It is to be noted that the tapering angle "A" is not limited to this value and it is possible to change the tapering angle "A" suitably as desired.

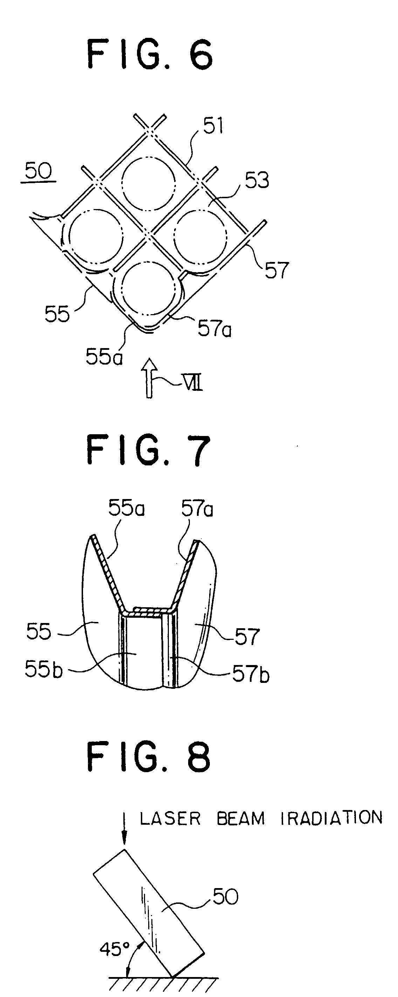

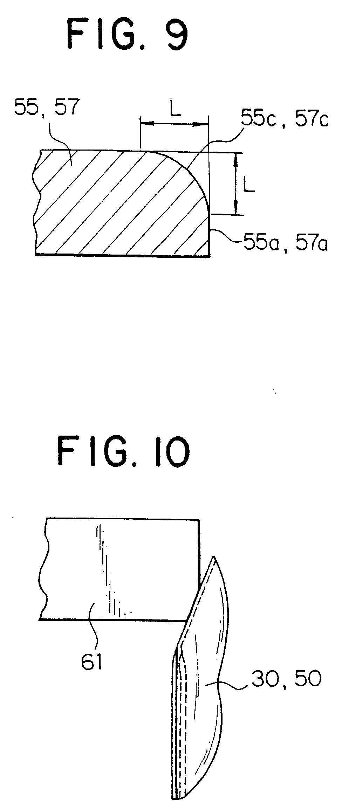

The steps of making, by laser beam work, beveling and finishing work such as done by the above described coining to the slanted portions of the outer straps of the grid will now be described. Such a condition of a grid 50 is shown in Figs. 6, 7. In the drawings, inner straps 51, grid cells 53, outer straps 55, 57, slanted portions 55a, 57a, and joint end portions 55b, 57b correspond to the inner straps 31, grid spaces 33, outer straps 35, 37, slanted portions 35a, 37a and joint end portions 35b, 37b of the grid 30 described above, respectively, and their detailed descriptions are therefore omitted. The joint end portions 55b, 57b of the outer straps 55, 57 of the grid 50 are overlapped and welded with a laser beam. The chamfering and finishing work are applied to the slanted portions 55a, 57a by utilizing a laser beam irradiating apparatus mainly used for the above described welding work. As schematically shown in Fig. 8, the laser beam projection is performed on the grid 50 at an inclination of 45 degrees. However, this inclination angle may be changed suitably as the angle in the above described punching is done. The state of the slanted portions 55a, 57a of the outer straps 55, 57 from which sharp edges have been removed by beam irradiation is shown in Fig. 9. In this case, an edge rounding length L is (2/3) t to (1/3) t where t is the plate thickness of the outer straps 55, 57. It is preferable to smooth the surface 55c, 57c chamfered by the laser beam irradiation and to form a somewhat curved portion as shown in the drawing.

Furthermore, Fig. 10 shows a state of finishing work in which a block or the like modeled after the outside shape of the grid assembly (with a tapering angle the same as the angle at the folded corner portion) is applied to the corner portions of the grid assembly made of a zirconium base alloy and slid along them to snugly fit the slanted portion of the folded corner portion of the outer strap to thereby reduce interferences. Combining this finishing work with the chamfering steps in the described first or second embodiments, it becomes possible to raise the sliding performance at the corner portion of the grid assembly.

Further, in the explanation of the above described embodiments, one instance has been described for the shape of the end portion of the outer strap, but it is not intended that the shape be limited thereto and it should be understood that various modifications may be included in the scope of the present invention.

As described above, according to the present invention, since the upper and lower edges of the outer straps at the corner portions of the grid for the nuclear reactor fuel assembly are smoothly finished by coining or the like, even if the grid corners of the adjacent fuel assemblies of the fuel assemblies are brought into contact with each other during transfer operations, the corners slide along each other and no damage is caused to the grid.

Furthermore, according to the method of the present invention, since the upper and lower edges of the outer strap at the corner portion of the grid are smoothly finished by coining, the temperature at the portion being worked may be kept at a low level, and hence, it is possible to avoid ignition even if the outer straps are made of a zirconium base alloy.

Furthermore, according to the method of the present invention, since the upper and lower edges of the outer strap at the corner portion of the grid are smoothly finished by the laser beam work by utilizing the laser beam irradiating apparatus mainly used in the fabrication of the main parts of the grid, it is possible to perform the work efficiently.

Furthermore, according to the fabricating method of the invention, since the upper and lower edges of the outer strap at the corner portion of the grid are finished by using a block having the tapered surface, it is possible to readily secure smoothness over the entire corner.

## Claims

1. A grid assembly for a nuclear reactor fuel assembly comprising a plurality of inner straps which are disposed to extend in directions parallel and perpendicular to one another, are placed in engagement with one another, and are made of thin metal strips, and outer straps each positioned at four sides thereof for surrounding a group of the inner straps, the outer straps being made of thin metal strips, and characterized in that smooth tapered edge surfaces are formed at slanted portions of the outer straps by coining or laser beam irradiation.

2. A method for fabricating a grid assembly of a nuclear reactor fuel assembly comprising a plurality of inner straps which are disposed to extend in directions parallel and perpendicular to one another, are placed in engagement with one another, and are made of thin metal strip and outer straps each positioned at four sides thereof for surrounding the group of the inner straps, and made of thin metal strip, the method being characterized by comprising the steps of forming a smooth tapered edge surface by coining a slanted portion of the outer strap, and folding and joining the outer strap by welding.

3. A method for fabricating a grid assembly of a nuclear reactor fuel assembly comprising a plurality of inner straps which are disposed to extend in directions parallel and perpendicular to one another, are placed in engagement with one another, and are made of thin metal strip and outer straps each positioned at four sides thereof for surrounding the group of the inner straps, and made of thin metal strips, the method being characterized in that the step of welding includes a step of forming a smooth tapered edge surface by laser beam irradiation along the slanted portion of the outer straps at a corner at which they are folded.

4. A method for fabricating a grid assembly of a nuclear reactor fuel assembly comprising a plurality of inner straps which are disposed to extend in directions parallel and perpendicular to one another, are placed in engagement with one another, and are made of thin metal strip and outer straps each positioned at four sides thereof for surrounding the group of the inner straps, and made of thin metal strips, said method including the steps of holding a block having a tapered surface of the same angle as that of the folded corner portion on the corner portion of the grid assembly, and sliding it along the corner so as to form a snugly fitting shape thereby reducing interferences.
